# EUROPÄISCHE PATENTSCHRIFT

(11) **EP 3 679 211 B1**
(45) Veröffentlichungstag und Bekanntmachung des Hinweises auf die Patenterteilung: **26.05.2021**
(21) Anmeldenummer: 18778365.9
(22) Anmeldetag: 28.08.2018
(51) Int. Cl.: E05B 85/16, E05B 17/00

(54) **KRAFTFAHRZEUGTÜRGRIFFANORDNUNG MIT EINGEGOSSENER ELEKTRONIK**
MOTOR VEHICLE DOOR HANDLE ARRANGEMENT WITH POTTED ELECTRONICS
ENSEMBLE FORMANT POIGNÉE DE PORTIÈRE DE VÉHICULE AUTOMOBILE INTÉGRANT UN SYSTÈME ÉLECTRONIQUE SCELLÉ

(30) Priorität: 05.09.2017 DE 102017008340
(43) Veröffentlichungstag der Anmeldung: 15.07.2020
(73) Patentinhaber: Huf Hülsbeck & Fürst GmbH & Co. KG, 42551 Velbert (DE)
(72) Erfinder: KALESSE, Michael, 40885 Ratingen (DE); SCHINDLER, Mirko, 42549 Velbert (DE); VAN GASTEL, Peter, 42699 Solingen (DE); GORNIK, Andreas, 58285 Gevelsberg (DE)
(86) Internationale Anmeldenummer: PCT/EP2018/000416
(87) Internationale Veröffentlichungsnummer: WO 2019/048077

(56) Entgegenhaltungen:
- EP-A2- 2 607 581
- DE-A1-102009 009 396
- DE-A1-102012 101 882
- DE-A1-102015 016 467

## Beschreibung

Die Erfindung betrifft eine Kraftfahrzeugtürgriffanordnung nach dem Oberbegriff gemäß Anspruch 1. Ferner betrifft die Erfindung ein Verfahren zur Herstellung und Montage einer solchen Kraftfahrzeugtürgriffanordnung.

Derartige Kraftfahrzeugtürgriffanordnungen mit einem Handgriff zur Türbetätigung eines Kraftfahrzeuges sind bekannt. Ferner ist es bekannt, in dem Handgriff elektronischen Bauteile wie beispielsweise eine Antenne, einer um die Antenne gewickelten Spule zum automatischen Aufbau einer Funkverbindung zu einem externen Identifikationsgeber und/oder Sensoren anzuordnen. Die Begriffe Wicklung und Spule werden synonym verwendet. Um die elektronischen Bauteile gegen Umwelteinflüsse zu schützen, wird der für die elektronischen Bauteile vorgesehene Einbauraum nach dem Einsetzen der elektronischen Bauteile mit Vergussmasse vergossen. Beispielhafte Kraftfahrzeugtürgriffanordnungen sind der DE102015016467 A1 und der EP2607581 A2 zu entnehmen.

Die Aufgabe der Erfindung ist es, eine Kraftfahrzeugtürgriffanordnung anzugeben, bei eine größere Flexibilität der Anordnung elektronischer Bauteile bei gutem Schutz der elektronischen Bauteile gegen äußere Einflüsse gegeben ist.

Diese Aufgabe wird erfindungsgemäß durch eine Kraftfahrzeugtürgriffanordnung gemäß Anspruch 1 gelöst. Vorteilhafte Weiterbildungen der Erfindung sind in den Unteransprüchen angegeben.

Besonders vorteilhaft bei der Kraftfahrzeugtürgriffanordnung mit einem Griffträger und einer an dem Griffträger befestigten Außenschale, wobei zwischen dem Griffträger und der Außenschale zumindest eine Elektronikbaugruppe mit elektronischen Bauteilen angeordnet ist, wobei der Griffträger zumindest eine erste Kammer zur Aufnahme elektronischer Bauteile aufweist, die nach dem Einsetzen der elektronischen Bauteile mit Vergussmasse vergossen ist, ist es, dass eine zweite Kammer zur Aufnahme elektronischer Bauteile zwischen dem Griffträger und der Außenschale ausgebildet ist und der Griffträger zumindest eine Durchbrechung aufweist, durch welche die zweite Kammer nach dem Befestigen der Außenschale an dem Griffträger mit Vergussmasse befüllbar ist.

Dadurch, dass zwischen dem Griffträger und der Außenschale eine zweite Kammer zur Aufnahme elektronischer Bauteile ausgebildet ist, weist die Kraftfahrzeugtürgriffanordnung eine größere Flexibilität der Anordnung elektronischer Bauteile auf. Dadurch, dass beide zwischen dem Griffträger und der Außenschale ausgebildeten Kammern zur Aufnahme elektronischer Bauteile nach dem Einsetzen der elektronischen Bauteile in die beiden Kammern jeweils mit Vergussmasse ausgegossen werden, sind die elektronischen Bauteile in den Kammern zuverlässig gegen Feuchtigkeit und gegen Stöße und Vibrationen geschützt.

Die Fertigung wird dabei vereinfacht, da der Griffträger zumindest eine Durchbrechung aufweist, durch welche die zweite Kammer nach dem Befestigen der Außenschale an dem Griffträger mit Vergussmasse befüllbar ist. Es kann somit eine vorgefertigte Elektronikbaugruppe mit elektronischen Bauteilen zunächst in die erste Kammer in dem Griffträger eingelegt und anschließend die erste Kammer mit Vergussmasse vergossen werden. Anschließend wird die Außenschale an dem Griffträger montiert und die zweite Kammer zwischen Außenschale und Griffträger, in der nach der Montage der Außenschale weitere elektronische Bauteile einliegen, wird anschließend durch die hierzu vorgesehene Durchbrechung in dem Griffträger mit Vergussmasse befüllt.

Bei der Vergussmasse kann es sich um eine aushärtende Vergussmasse handeln, die nach dem Aushärten reversibel verformbar ist und hierdurch geeignet ist, Stöße und Vibrationen zu dämpfen. Hierdurch sind die elektronischen Bauteile zuverlässig sowohl gegen Feuchtigkeit als auch gegen Stöße und Vibrationen geschützt.

Die Außenschale bildet nach der Montage an dem Griffträger und dem Einbau der Kraftfahrzeugtürgriffanordnung an einem Kraftfahrzeug die äußere Abdeckung und damit sowohl einen optischen Abschluss als auch einen Schutz gegenüber Feuchtigkeit und äußeren Einflüssen.

Besonders bevorzugt weist die Elektronikbaugruppe zumindest eine Antenne mit einem ferromagnetischen Kern und einer um den Kern gewickelten Spule und zumindest eine Platine und/oder einen kapazitiven Näherungssensor auf. Insbesondere kann die Antenne in der ersten Kammer einliegen und die Platine und/oder der Näherungssensor können in der zweiten Kammer einliegen.

Durch das Ausgießen sowohl der ersten Kammer als auch der zweiten Kammer mit Vergussmasse, nach dem Einbringen der elektronischen Bauteile in die jeweiligen Kammern sind die elektronischen Bauteile wie Platinen, kapazitiver Näherungssensor und die die Antenne mitsamt ihrer Wicklung gegen Feuchtigkeit und Vibrationen geschützt. Hierdurch werden Fehlfunktionen und Ausfälle der elektronischen Bauteile zuverlässig verhindert.

Vorzugsweise sind der Griffträger und die Außenschale formschlüssig miteinander verbunden.

Der Griffträger und/oder die Außenschale können Hinterschneidungen aufweisen, die vom Gegenstück hintergriffen werden und ein Koppeln der Bauteile durch ein Einschieben am ersten Ende gestatten, wobei danach ein Verschwenken des gegenüberliegenden Endes in Richtung auf die Gegenstück mit Einclipsen an entsprechenden Hinterschneidungen am Gegenstück erfolgt. Die Montage der Außenschale an dem Griffträger kann somit insbesondere dadurch erfolgen, dass ein erstes Ende der Außenschale auf den Griffträger in einer derartigen Weise aufgeschoben wird, dass Hinterschneidungen an dem korrespondierenden ersten Ende des Griffträgers von Befestigungselementen der Außenschale hintergriffen werden. Sodann erfolgt eine Drehbewegung der Außenschale gegenüber dem Griffträger indem das zweite Ende der Außenschale soweit in Richtung auf den Griffträger verschwenkt wird, bis Hinterschneidungen am zweiten Ende des Griffträgers mit entsprechenden Gegenstücken an der Außenschale in Eingriff kommen und die Außenschale somit durch ein Einclipsen am zweiten Ende am dem Griffträger befestigt wird. Die Hinterschneidungen am ersten Ende und/oder am zweiten Ende des Griffträgers und/oder die hierzu korrespondierenden Befestigungselemente an der Außenschale können Anlaufschrägen aufweisen, um das Aufsetzen und Montieren der Außenschale zu erleichtern.

Vorzugsweise weist die erste Kammer zumindest eine Ausnehmung in einer Wandung zur Durchführung elektrisch leitender Kontaktstifte auf, wobei die Elektronikbaugruppe ein Anschlussstück aufweist, welches in der Ausnehmung der Wandung der ersten Kammer die erste Kammer abdichtend formschlüssig und/oder kraftschlüssig einliegt.

Das Anschlussstück kann dabei insbesondere durch einmaliges oder wiederholtes Kunststoffumspritzen vorgefertigter Kontaktstifte hergestellt sein.

Dabei sind die Kontaktstifte einmalig oder wiederholt kunststoffumspritzt und bilden ein Anschlussstück, insbesondere kann bei einem zweiten Kunststoffumspritzen ein weicherer als Dichtung der ersten und/oder der zweiten Kammer dienender Werkstoff verwendet werden. Es können also bei mehreren Kunststoffspritzvorgängen derselbe Kunststoffwerkstoff oder unterschiedliche Kunststoffwerkstoffe mit unterschiedlichen Eigenschaften zum Einsatz kommen. Bei einem ersten Kunststoffspritzvorgang kann somit ein härterer Werkstoff zur Bildung eines stabilen Anschlussstücks zum Einsatz kommen. Diese Vorstufe kann in einem zweiten Kunststoffspritzvorgang mit einem weicheren Kunststoffwerkstoff umspritzt werden, wodurch außenseitig an dem Anschlussstück eine Dichtung ausgebildet wird. Diese Dichtung des Anschlussstückes dient insbesondere zumindest als Dichtung der ersten Kammer in dem Griffträger. Die Dichtungswirkung wird dadurch erzielt, dass das Anschlussstück in der Ausnehmung der Wandung der Antennenkammer die erste Kammer abdichtend formschlüssig und/oder kraftschlüssig einliegt.

Vorzugsweise weist die Außenschale eine Wanne auf, welche die zweite Kammer bildet und in der ein Teil der Elektronikbaugruppe, insbesondere eine Platine und/oder ein kapazitiver Näherungssensor, einliegt, wobei die Wanne zumindest eine Ausnehmung in einer Wandung zur Durchführung elektrisch leitender Kontaktstifte aufweist und wobei ein Anschlussstück der Elektronikbaugruppe in der Ausnehmung der Wandung der Wanne die Wanne abdichtend formschlüssig und/oder kraftschlüssig einliegt.

Dabei weist die Elektronikbaugruppe ein Anschlussstück auf, welches in einer Ausnehmung einer Wandung der zweiten Kammer die zweite Kammer abdichtend formschlüssig und/oder kraftschlüssig einliegt.

Bevorzugt weist die Elektronikbaugruppe ein Anschlussstück zur Durchführung elektrischer Verbindungsleitungen auf, wobei das Anschlussstück außenseitig eine Antennenkammernut aufweist, die mit einer Ausnehmung der Wandung der ersten Kammer in dem Griffträger einen Formschluss bildet.

Vorzugsweise weist die Elektronikbaugruppe ein Anschlussstück zur Durchführung elektrischer Verbindungsleitungen auf, wobei das Anschlussstück außenseitig eine Wannennut aufweist, die mit einer Ausnehmung der Wandung einer die zweite Kammer bildenden Wanne in der Außenschale einen Formschluss bildet.

Besonders bevorzugt weist die Elektronikbaugruppe ein Anschlussstück zur Durchführung elektrischer Verbindungsleitungen auf, wobei das Anschlussstück außenseitig eine Antennenkammernut aufweist, die mit der Ausnehmung der Wandung der ersten Kammer in dem Griffträger einen Formschluss bildet, und wobei das Anschlussstück außenseitig eine Wannennut aufweist, die mit einer Ausnehmung der Wandung einer Wanne in der Außenschale zur Ausbildung der zweiten Kammer einen Formschluss bildet, wobei die Antennenkammernut und die Wannennut gegenläufig angeordnet sind.

Insbesondere kann das Anschlussstück der Elektronikbaugruppe eine Außenkontur mit einer oder mehreren Ausnehmungen und/oder Nuten und/oder Vorsprüngen aufweisen, die ferner als Positionierhilfe beim Einsetzen des Anschlussstücks insbesondere gemeinsam mit einem gegebenenfalls einstückig und insbesondere materialeinheitlich mit dem Anschlussstück ausgebildeten Antennenträger in die erste Kammer dienen und mit entsprechenden Gegenstücken an der Kontur der Wandung der ersten Kammer zusammenwirken.

Ferner können das Anschlussstück und ein Antennenträger einstückig, insbesondere materialeinheitlich ausgebildet sein. Anschlussstück und Antennenträger können somit einstückig und insbesondere materialeinheitlich durch einen ersten Kunststoffspritzvorgang hergestellt sein. Auf dieses Bauteil kann in einem zweiten Kunststoffspritzvorgang wiederum eine Dichtung aus einem insbesondere weicheren Kunststoffwerkstoff aufgespritzt sein.

Dementsprechend können die Kontaktstifte mit Kunststoff umspritzt sein und ein Anschlussstück bilden, wobei das Anschlussstück und der Antennenträger einstückig, insbesondere materialeinheitlich ausgebildet sind. Vorzugsweise ist das Anschlussstück durch wiederholtes Kunststoffumspritzen vorgefertigter Kontaktstifte hergestellt, wobei in dem letzten Kunststoffspritzvorgang ein eine flexible Dichtung bildender Kunststoff verwendet wird. Besonders bevorzugt weist das Anschlussstück wie erläutert außenseitig eine erste Nut auf, die mit der Ausnehmung der Wandung der ersten Kammer einen Formschluss bildet, wobei das Ansclhussstück ferner eine zweite zur ersten Nut gegenläufige Nut aufweisen kann, die mit einer Ausnehmung in der Wandung der die zweite Kammer bildenden Wanne einen Formschluss bildet.

Besonders vorteilhaft ist dabei, dass das an dem Antennenträger ausgebildete Anschlussstück einerseits als Positionierhilfe beim Einsetzen des Antennenträgers in die erste Kammer dient, sondern dass gleichzeitig beim Einsetzen der Baugruppe in den Griffträger der Formschluss zwischen dem Anschlussstück und der Durchbrechung der Wandung der ersten Kammer herbeigeführt wird. Die Durchbrechung in der Wandung dient der Durchführung der elektrischen Verbindungen von der Antenne zu der Platine, die nach erfolgter Montage in der zweiten Kammer einliegt. Durch die gegenläufig orientierte zweite Nut an der Außenseite des Anschlussstücks kommt das Anschlussstück ferner bei der Montage der Außenschale an dem Griffträger automatisch mit der Durchbrechung in der Wandung der die zweite Kammer bildenden Wann an der Außenschale in Eingriff und bildet einen zweiten Formschluss. Nach dem Einsetzen der Elektronikbaugruppe in den Griffträger kommt die Antennenkammernut bereits dichtend in Eingriff an der ersten Kammer. Durch die gegenläufige Anordnung kommt die Wannennut bei Aufsetzen der Außenschale automatisch abdichtend in Eingriff an der zweiten Kammer.

In der ersten Kammer kann somit ein die Antenne mit einem einstückigen oder mehrteiligen ferromagnetischen Kern und einer um den Kern gewickelten Spule aufnehmender Antennenträger einliegen. Ferner kann der Antennenträger zumindest ein Sensorblech eines kapazitiven Näherungssensors aufnehmen, insbesondere kann das Sensorblech eines kapazitiven Näherungssensors in dem Antennenträger formschlüssig einliegen.

Das Verfahren zur Herstellung einer derartigen Kraftfahrzeugtürgriffanordnung umfasst folgende Schritte:
- Einsetzen einer vorgefertigten Elektronikbaugruppe in einen Griffträger und Einlegen zumindest eines Teiles der Elektronikbaugruppe in eine erste Kammer in dem Griffträger;
- Ausgießen der ersten Kammer mit Vergussmasse;
- Aufsetzen einer Außenschale auf den Griffträger und Befestigung der Außenschale an dem Griffträger, wodurch gleichzeitig ein Teil der Elektronikbaugruppe in eine zweite Kammer in der Außenschale eingelegt wird;
- Drehen der Kraftfahrzeugtürgriffanordnung um 180° um eine Längsachse der Kraftfahrzeugtürgriffanordnung, sodass die Außenschale unten liegt;
- Ausgießen der zweiten Kammer durch zumindest eine Durchtrittsöffnung in dem Griffträger hindurch mit Vergussmasse.

Die Längsachse verläuft in diesem Sinne parallel zur Achse des ferromagnetischen Kern der Antenne und zur Längsachse der den ferromagnetischen Kern umgebenden Wicklung der Antenne. Für den jeweiligen Vorgang des Ausgießens der Kammern mit Vergussmasse ist die teilmontierte Kraftfahrzeugtürgriffanordnung jeweils derart positioniert, sodass die Vergussmasse senkrecht von oben in die jeweils auszugießende Kammer eingefüllt werden kann. Zur Befüllung der zweiten Kammer mit Vergussmasse weist der Griffträger zumindest eine Durchbrechung auf, durch die hindurch die Vergussmasse in die zweite Kammer eingebracht werden kann. Diese Durchbrechung in dem Griffträger dient somit als Einfüllöffnung für die Vergussmasse beim Ausgießen der zweiten Kammer.

Vorzugsweise wird ein Anschlussstück der Elektronikbaugruppe bei dem Einsetzen der vorgefertigten Elektronikbaugruppe in den Griffträger und Einlegen zumindest eines Teiles der Elektronikbaugruppe in eine erste Kammer in dem Griffträger formschlüssig und/oder kraftschlüssig insbesondere abdichtend mit einer Ausnehmung in einer Wandung der ersten Kammer in Eingriff gebracht.

Besonders bevorzugt wird ein Anschlussstück der Elektronikbaugruppe bei dem Aufsetzen der Außenschale auf den Griffträger und Befestigung der Außenschale an dem Griffträger, wodurch gleichzeitig ein Teil der Elektronikbaugruppe in die zweite Kammer in der Außenschale eingelegt wird, formschlüssig und/oder kraftschlüssig insbesondere abdichtend mit einer Ausnehmnung in einer Wandung der zweiten Kammer in Eingriff gebracht.

Vorzugsweise weisen der Griffträger und die Außenschale Hinterschneidungen und/oder Führungen auf, die vom Gegenstück hintergriffen werden und wobei das Aufsetzen und Befestigen der Außenschale an dem Griffträger durch ein Einschieben am ersten Ende hinter die Führungen am Griffträger erfolgt, wobei danach ein Verschwenken des gegenüberliegenden Endes der Außenschale in Richtung auf den Griffträger soweit erfolgt, bis ein Einclipsen eines Rasthakens an einer Nase an dem Gegenstück erfolgt ist.

Ein Ausführungsbeispiel der Erfindung ist in den Figuren dargestellt und wird nachfolgend erläutert. Es zeigen:
- Fig.1: einen vormontierten Antennenträger mit Wicklung und Anschlussstück;
- Fig. 2: einen Stecker mit Kontakten zur Verbindung mit einer Platine;
- Fig. 3: die Platine der Elektronikbaugruppe und die Montage eines Sensorbleches an der Platine;
- Fig. 4: die Herstellung der Elektronikbaugruppe durch die Montage des Steckers sowie des Antennenträgers mit dem Anschlussstück an der Platine;
- Fig. 5: die Unterseite der Elektronikbaugruppe mit den Lötpunkten zum Verlöten der Kontakte mit der Platine;
- Fig. 6: das Einsetzten der Elektronikbaugruppe in den Griffträger;
- Fig. 7: den Vergussprozess beim Vergießen der ersten Kammer mit Vergussmasse;
- Fig. 8: den Montageprozess der Außenschale an dem Griffträger;
- Fig. 9: eine Ansicht auf einen vergrößerten Ausschnitt der Innenseite der Außenschale;
- Fig. 10: die Ansicht auf die Innenseite der Außenschale mit einliegender Elektronikbaugruppe sowie einen vergrößerten Ausschnitt;
- Fig. 11: den Vergussprozess beim Vergießen der zweiten Kammer mit Vergussmasse.

Anhand der nachfolgenden Figurenbeschreibung wird gleichzeitig das Montage- und Herstellungsverfahren zur Herstellung einer solchen Kraftfahrzeugtürgriffanordnung erläutert.

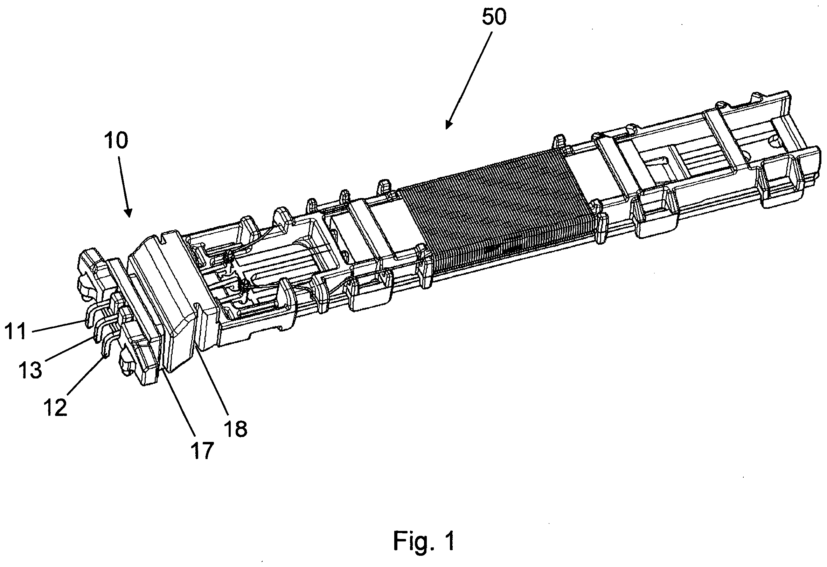

Fig. 1 zeigt eine vormontierte Antennenbaugruppe 50 aus dem Antennenträger 20 und dem daran befestigten Anschlussstück 10. Das Anschlussstück 10 ist durch Kunststoffumspritzen der Kontaktstifte 11, 12, 13 hergestellt. Die Kontaktstifte 11, 12, 13 dienen der Herstellung des elektrischen Anschlusses der Antenne an eine Platine. Das Anschlussstück 10 weist außenseitig zwei jeweils drei Außenseiten überspannende Nuten 17, 18 auf. Dabei ist die Orientierung der beiden jeweils drei Außenseiten überspannenden Nuten 17, 18 gegenläufig. Diese Nuten 17, 18 bilden Dichtungsbereiche. Die Nuten 17, 18 bilden dabei Dichtungen, die mit Kammern, in denen elektronische Komponenten der Kraftfahrzeugtürgriffanordnung einliegen, zusammenwirken und diese Kammern abdichten. Die Montage und Funktionsweise wird weiter unten erläutert. In dem dargestellten Ausführungsbeispiel gemäß der Figur 1 erfolgt das Umspritzen der Kontaktstifte 11, 12, 13 in zwei Schritten unter Verwendung unterschiedlicher Kunststoffsorten. Zur Herstellung einer Vorstufe wird dabei ein härterer Kunststoff verwendet. Zur Herstellung des vollständigen Anschlussstücks 10 beim zweiten Kunststoffspritzvorgang wird ein weicherer Kunststoff verwendet, welcher geeignet ist, als Dichtungselement zu dienen und der somit eine größere Verformbarkeit aufweist, als der Kunststoff der Vorstufe.

In einer nicht dargestellten Alternative wird das Anschlussstück 10 unter Verwendung eines als Dichtungselement geeigneten Kunststoffes in einem einzigen Kunststoffspritzvorgang hergestellt. Dabei werden in einem einzigen Kunststoffspritzvorgang die Kontaktstifte 11, 12, 13 mit dem als Dichtung geeigneten Kunststoff umspritzt.

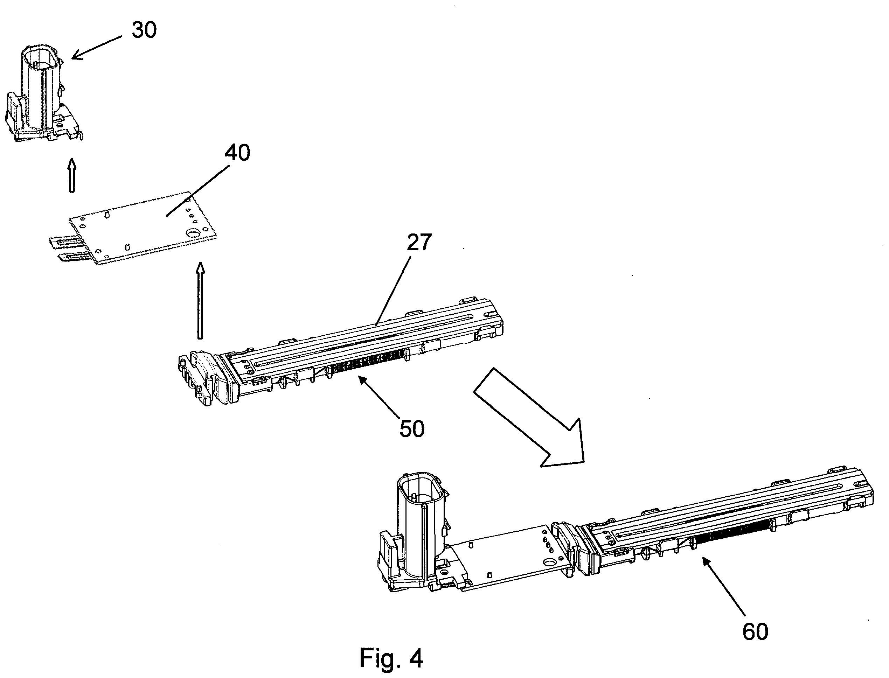

Die Kontaktstifte 11, 12, 13 dienen der Kopplung der Antenne sowie eines in dem Antennenträger 20 einliegenden Sensorblechs eines kapazitiven Näherungssensors mit der Elektronik des Kraftfahrzeugtürgriffs und sind mit Anschlüssen der Antenne sowie des Sensorblechs verlötet. Ferner sind in Figur 1 der in dem Antennenträger einliegende ferromagnetische Kern 21 der Antenne und die den Kern 21 umgebende Wicklung 26 zu erkennen. Der ferromagnetische Kern 21 liegt formschlüssig in dem Antennenträger 20 ein. Bei dem Antennenträger 20 handelt es sich um ein Kunststoffspritzgussteil. Der ferromagnetische Kern 21 kann einstückig oder mehrteilig ausgeführt sein. Die Wicklung 26 ist um den Antennenträger 20 und damit gleichzeitig um den in dem Antennenträger 20 einliegenden ferromagnetischen Kern 21 gewickelt. Zusätzlich zum ferromagnetischen Kern 21 und der Wicklung 26 nimmt der Antennenträger 20 ein Sensorblech eines kapazitiven Näherungssensors auf, welches in der perspektivischen Darstellung nach Fig. 1 nicht sichtbar ist. Erkennbar ist das Sensorblech 27 des kapazitiven Näherungssensors in Fig. 4, welche die Antennenbaugruppe 50 in einer anderen Ansicht zeigt. Das Sensorblech 27 des kapazitiven Näherungssensors liegt formschlüssig in dem Antennenträger 20 ein. Das Sensorblech ist in Nuten in dem Antennenträger 20 eingeschoben, wobei die Nuten derart positioniert sind, sodass das Sensorblech außerhalb der Wicklung 26 der Antenne parallel zu dem ferromagnetischen Kern 21 der Antenne liegt. Innerhalb der Wicklung 26 liegt somit nur der ferromagnetische Kern 21 der Antenne und der die Wicklung tragende Abschnitt des Antennenträgers 20.

Anschlussstück 10 und Antennenträger 20 können alternativ auch einstückig und materialeinheitlich durch Kunststoffumspritzen der Kontaktstifte 11, 12, 13 hergestellt sein.

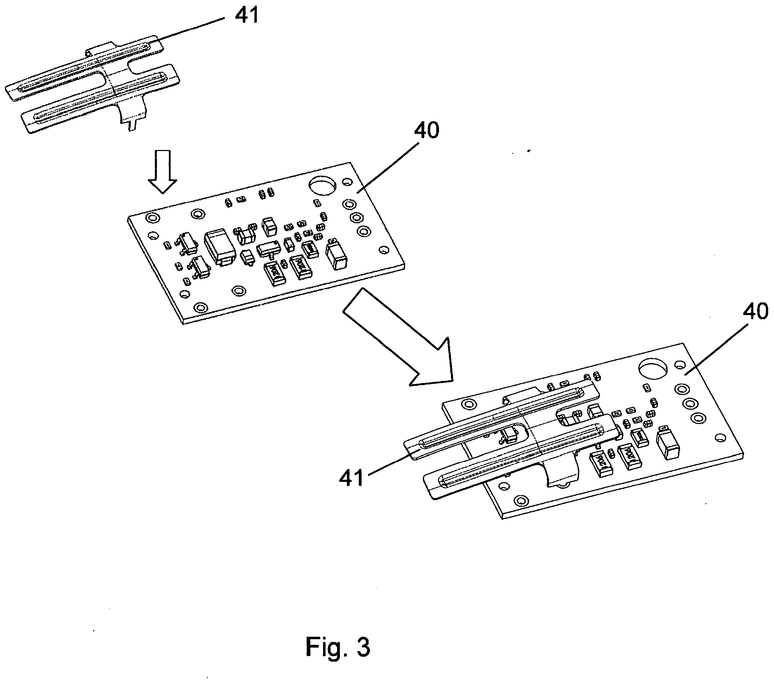

Die Antenne der Antennenbaugruppe 50 dient dabei dem Empfang von Fernbedienungssignalen zur Fernbedienung des Schließsystems durch einen Benutzer und der Weitergabe der entsprechenden Funksignale an die Elektronik auf der Platine 40 gemäß Figur 3. Das Sensorblech des kapazitiven Näherungssensors dient dazu, dass Hintergreifen des Handgriffs durch einen Benutzer zu detektieren um die Elektronik der Kraftfahrzeugtürgriffanordnung hierdurch zu aktivieren.

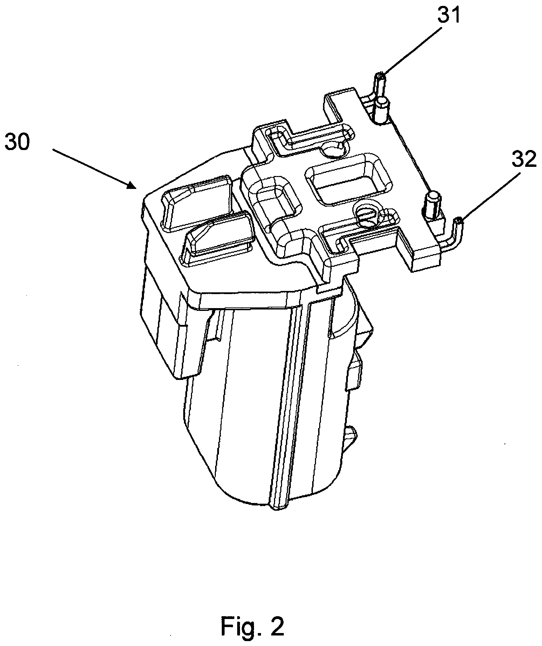

Für die Kopplung der Elektronik der Kraftfahrzeugtürgriffanordnung mit dem Kraftfahrzeug ist ein Stecker 30 vorgesehen, der in Figur 2 dargestellt ist. Der Stecker 30 ist durch einmaliges oder mehrmaliges Kunststoffumspritzen der Kontaktstifte 31, 32 hergestellt. Die Kontaktstifte 31, 32 des Steckers 30 dienen der Kopplung der Elektronik des Kraftfahrzeugtürgriffs mit der Fahrzeugelektronik.

Fig. 3 zeigt die mit Elektronikbauteilen bestückte Platine 40 der Kraftfahrzeugtürgriffanordnung. Die bestückte Platine 40 dient der Verarbeitung und Weitergabe der Signale der Antenne sowie des Sensorblechs und der Kopplung mit der Fahrzeugelektronik über den Stecker 30. Ferner wird auf der Platine 40 ein als Verriegelungsblech 41 dienendes weiteres Sensorblech durch Aufstecken von oben auf die Platine 40 montiert, wie dies durch den Pfeil in Fig. 3 angedeutet ist. Die mit dem Verriegelungsblech 41 vormontierte Platine 40 ist in Fig. 3 unten rechts abgebildet.

In Fig. 4 ist der Vorgang der Montage des Steckers 30 durch Aufsetzen der Platine 40 von unten auf die Kontaktstifte 31, 32 des Steckers 30 sowie ferner die Montage der vormontierten Antennenbaugruppe 50 an der Platine 40 durch Einstecken der Kontaktstifte 11, 12, 13 des Anschlussstückes 10 in entsprechende Bohrungen in der Platine 40 dargestellt. Der Stecker 30 wird durch Einstecken der Kontaktstifte 31, 32 des Steckers 30 in die Platine 40 in entsprechende Durchgangsbohrungen in der Platine 40 montiert. Die Durchgangsbohrungen in der Platine 40 bilden die elektrisch leitenden Kontakte zur Platine 40. Die Antennenbaugruppe 50 wird ebenfalls durch Einstecken der Kontaktstifte11, 12, 13 des Anschlussstückes 10 in die Platine 40 in entsprechende Durchgangsbohrungen in der Platine 40 montiert. Die Durchgangsbohrungen in der Platine 40 bilden die elektrisch leitenden Kontakte zur Platine 40. Hierdurch folgt die Kopplung der Kontaktstifte 31, 32 des Steckers 30 mit der Platine 40 sowie ferner die Kopplung der Kontaktstifte 11, 12, 13 der Antennenbaugruppe 50 mit der Platine 40.

Hierdurch ergibt sich das Modul 60 aus der Antennenbaugruppe 50 mit der Antenne und der Wicklung sowie dem Anschlussstück, der Platine 40 und dem Stecker 30 wie dies in Fig. 4 dargestellt ist. Bei diesem Modul 60 bildet die Platine 40 somit ein tragendes Bauteil des Elektronikmoduls 60.

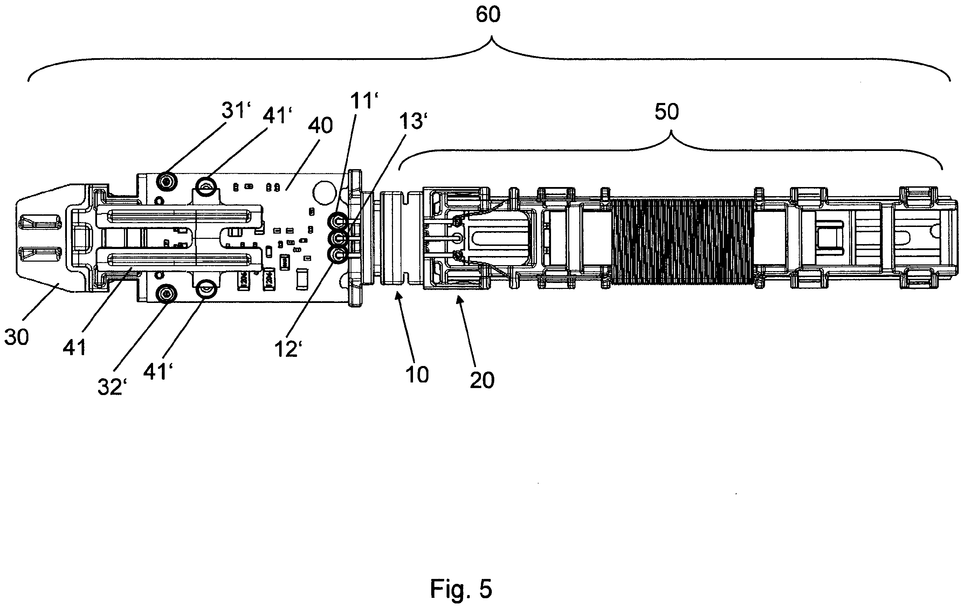

Fig. 5 zeigt die Unteransicht der Elektronikbaugruppe 60 mit den Lötpunkten 11', 12', 13', 31', 32', 41' zur Verbindung der Kontaktstifte 11, 12, 13, 31, 32 sowie des Verriegelungsblechs 41 an der Platine 40. Die Lötpunkte 11', 12', 13', 31', 32', 41' sind in Fig. 5 eingekreist. Das Verlöten sämtlicher Kontaktpunkte an der Platine 40 erfolgt dabei von der Oberseite der Platine 40 aus, wie dies in Fig. 5 dargestellt ist. Das bedeutet, dass das Verlöten der Kontaktstifte 11, 12, 13, 31, 32 an der Platine 40 von derselben Seite aus erfolgt, obwohl der Stecker 30 von einer anderen Seite in die Platine 40 eingesteckt ist als die Antennenbaugruppe 50 und das Verriegelungsblech 41, wie dies in Fig. 4 dargestellt ist. Durch das Verlöten aller Kontakte an der Platine 40 von derselben Seite aus wird die Herstellung vereinfacht, da ein Wechseln der Seite und damit das Erfordernis des Drehens der Baugruppe während des Fertigungsprozesses entfällt. Mit dem Vorgang des Verlötens der Kontaktpunkte an der Platine 40 ist der Herstellungsvorgang des Elektronikmoduls 60 abgeschlossen.

Das Elektronikmodul 60 umfasst somit den Antennenträger 20, der die Antenne mit dem ferromagnetischen Kern und der Spule sowie das Sensorblech aufnimmt, das Anschlussstück 10, durch das elektrisch leitende Kontaktstifte von der Antenne und dem Sensorblech zu der mit Elektronikbauteilen bestückten Platine 40 geführt und mit dieser verbunden sind, wobei die Platine 40 ferner mit dem Stecker 30 verbunden ist, der zur Herstellung der elektrischen Kontakte für die Elektronikbaugruppe des Moduls 60 dient. Dabei bildet die Platine 40 ein tragendes Bauteil des Moduls 60.

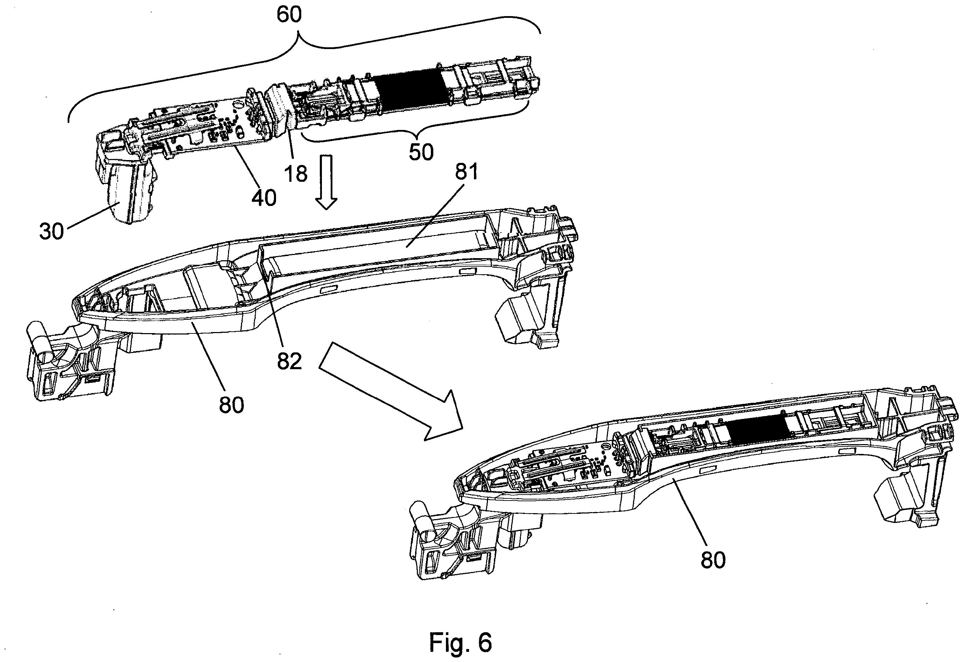

Fig. 6 zeigt das Einsetzen des Elektronikmoduls 60 in den Griffträger 80. Der Griffträger 80 weist eine erste Kammer 81 auf, die der Aufnahme der Antennenbaugruppe 50 des Elektronikmoduls 60 dient und daher auch als Antennenkammer 81 bezeichnet wird. Das Einsetzen erfolgt der Gestalt, dass die Antennenbaugruppe 50 in der Antennenkammer 81 in dem Griffträger 80 einliegt. Die als Antennenkammer 81 dienende erste Kammer in dem Griffträger 80 weist eine Ausnehmung 82 in ihrer Wandung auf. Die Abdichtung der Antennenkammer 81 in dem Griffträger 80 erfolgt mittels der Dichtung des Anschlussstückes 10. Die Wandung der Antennenkammer 81 weist eine Ausnehmung 82 auf, in der das Anschlussstück 10 mit der Nut 18 formschlüssig und kraftschlüssig einliegt. Das Anschlussstück 10 weist außenseitig die als Antennenkammernut dienende Nut 18 auf.

Die Wandung der Antennenkammer 81 liegt in der Nut 18 des Anschlussstückes 10 formschlüssig ein. Gleichzeitig wird eine Klemmwirkung zwischen der Wandung der Antennenkammer 81 und dem Anschlussstück 10 erzeugt. Zu diesem Zweck ist das Anschlussstück 10 wie oben erläutert aus einem als Dichtung geeigneten reversibel verformbaren Kunststoff ausgebildet. Die Antennenkammernut 18 des Anschlussstückes 10 und die Ausnehmung 82 der Antennenkammer 81 sind dementsprechend aufeinander abgestimmt. Die Antennenkammernut 18 bildet damit gleichzeitig eine Positionierhilfe beim Einsetzen der Antennenbaugruppe 50 des Elektronikmoduls 60 in die Antennenkammer 81. Durch die Klemmwirkung der Dichtung 16 in der Ausnehmung 82 der Wandung der Antennenkammer 81 wird die Antennenbaugruppe 50 gleichzeitig gegen ein Aufschwimmen während des nachfolgend erläuterten Vergussprozesses gesichert und fixiert. Die Vergussmasse härtet nach dem Vergussprozess aus.

Die Platine 40 des Elektronikmoduls 60 liegt außerhalb der Antennenkammer 81 in dem Griffträger 80 ein. Ferner weist der Griffträger 80 eine Ausnehmung auf, die von dem Stecker 30 des Elektronikmoduls 60 durchgriffen wird.

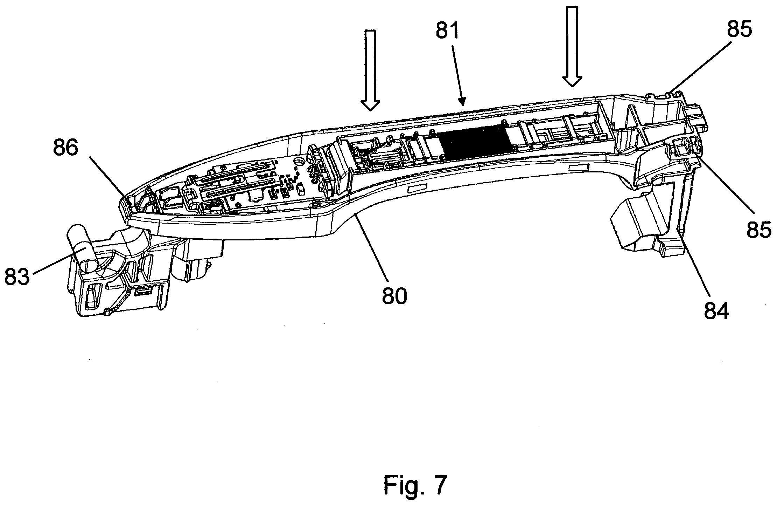

Nach dem Einsetzten der vormontierten Elektronikbaugruppe 60 in den Griffträger 80 erfolgt ein Vergießen der Antennenkammer 81 mit Vergussmasse, wie dies in Fig. 7 durch die Pfeile angedeutet ist. Das Vergießen der Antennenkammer 81 mit Vergussmasse dient dem Schutz der Antennenbaugruppe 50 vor Feuchtigkeit und Vibrationen, da die Vergussmasse in der Antennenkammer 81 aushärtet. Die Vergussmasse bildet somit einen wasserdichten Schutz der Antennenbaugruppe 50 und der verlöteten Kontakte gegen Feuchtigkeit. Ferner dient die Vergussmasse als Dämpfer gegen Vibrationen.

Ebenfalls in Fig. 7 erkennbar ist die Drehachse 83 um die herum die gesamte Kraftfahrzeugtürgriffanordnung im Einbauzustand drehbar ist. Hierzu wird die komplette Kraftfahrzeugtürgriffanordnung in einer entsprechenden Aufnahme in der Karosserie eines Kraftfahrzeuges montiert. Die vollständig montierte Kraftfahrzeugtürgriffanordnung wird nach ihrer weiter unten erläuterten Komplettierung und Fertigstellung in ein entsprechendes Gehäuse oder direkt in die Kraftfahrzeugkarosserie eingebaut. Üblicherweise befindet sich die Drehachse 83 der Kraftfahrzeugtürgriffanordnung in Fahrrichtung vorne, so dass am hinteren Ende der Kraftfahrzeugtürgriffanordnung der Griffhaken 84 zur Außenseite des Kraftfahrzeuges herausgezogen werden kann und über eine entsprechende Kopplung auf das Türschloss einwirkt und bei entriegelten Türschloss ein Öffnen der Kraftfahrzeugtür ermöglicht. Die Anordnung der Kraftfahrzeugtürgriffanordnung ist jedoch beliebig. Insbesondere kann diese auch umgekehrt an dem Kraftahrzeug oder auch senkrecht erfolgen.

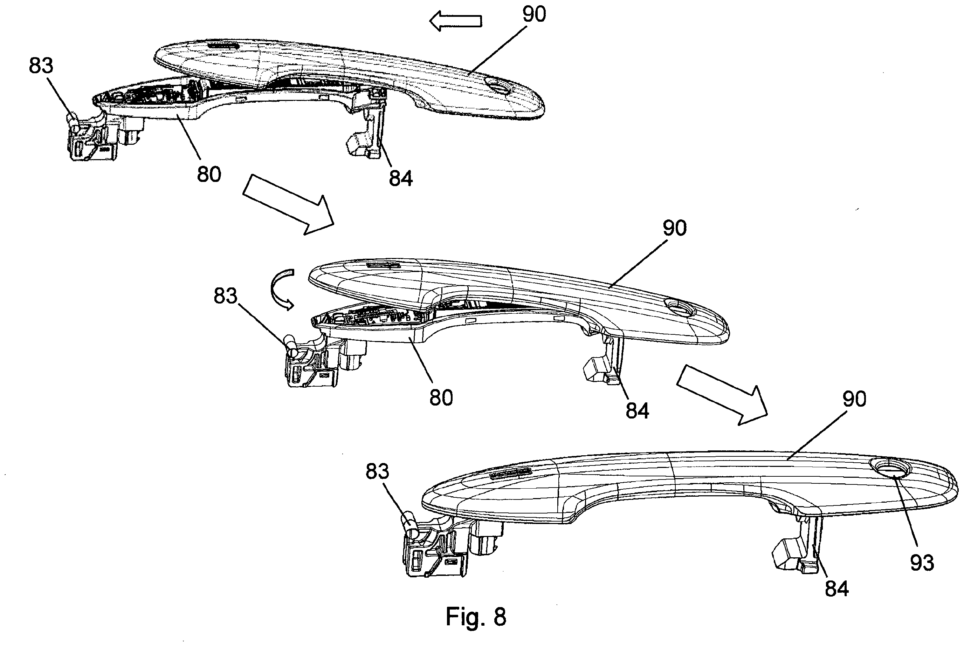

Zur Montage der Außenschale an dem Griffträger 80 weist der Griffträger an dem in Figur 7 rechten Ende, an welchem der Griffhaken 84 angeordnet ist, an beiden Seiten horizontal verlaufende Führungen 85 auf, die von entsprechenden Gegenstücken in Form von Hinterschneidungen 95 an der noch zu montierenden Außenschale der Kraftfahrzeugtürgriffanordnung hintergriffen werden können und die der Fixierung der Außenschale an dem Griffträger 80 dienen. Die Definition, wonach die Führungen 85 an dem Griffträger 80 horizontal verlaufen, bezieht sich dabei auf die Darstellung des Griffträgers 80 gemäß Figur 7 und nicht auf dessen endgültige Einbauposition oder Orientierung nach dem Einbau in eine Kraftfahrzeugtür. Am gegenüberliegenden Ende weist der Griffträger eine Nase 86 auf, die von einem Rasthaken 96 am korrespondierenden Ende der an dem Griffträger 80 zu montierenden Außenschale 90 hintergriffen werden kann und an welcher die Außenschale 90 durch Einclipsen festlegbar ist, wie es nachfolgend unter Bezugnahme auf Figur 8 erläutert wird.

Fig. 8 zeigt die Montage der Außenschale 90 an dem Griffträger 80. Hierzu wird die Außenschale 90 in der Bildebene gemäß Figur 8 von rechts auf die Führungen 85 am Griffträger 80 aufgeschoben, wobei nach dem Aufschieben in der Bildebene nach links korrespondierende Hinterschneidungen 95 an der Außenschale 90 die horizontal verlaufenden Führungen 85 an dem Griffträger 80 hintergreifen und somit die Außenschale 90 in senkrechter Richtung gemäß Figur 8 an dem Griffträger 80 festlegen und sichern. In einem zweiten Montageschritt wird das gegenüber liegende freie Ende der Außenschale 90 in einer Drehbewegung soweit in Richtung auf den Griffträger 80 verschwenkt, bis der Rasthaken 96 der Außenschale 90 hinter der Nase 86 an dem Griffträger 80 eingerastet ist. Hierdurch ist die Außenschale 90 an dem Griffträger 80 fixiert.

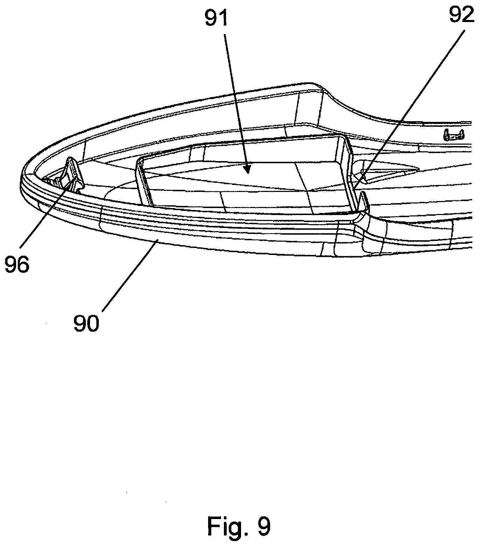

Figur 9 zeigt eine Ansicht auf einen Ausschnitt der Innenseite der Außenschale 90. In der Außenschale 90 ist eine zweite Kammer 91 zur Aufnahme elektronischer Bauteile zwischen dem Griffträger 80 und der Außenschale 90 ausgebildet. Diese zweite Kammer 91 dient der Aufnahme der Platine 40 und des Steckers 30 und wird zur Unterscheidung von der Antennenkammer 81 auch als Elektronikkammer 91 bezeichnet. Die Wandung der Elektronikkammer 91 weist eine Ausnehmung 92 auf, in welcher nach der Montage der Außenschale 90 an dem Griffträger 80 das Anschlussstück 10 einliegt.

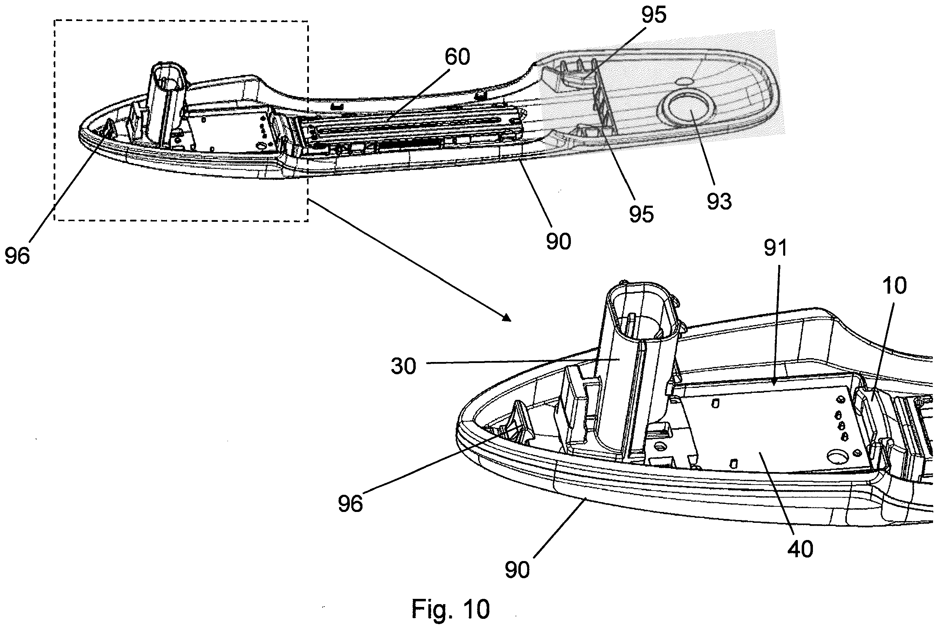

Figur 10 zeigt die Einbausituation der Elektronikbaugruppe 60 in der Außenschale 90 nach dem Zusammenbau, jedoch in der Darstellung gemäß Figur 10 zur Verdeutlichung des Zusammenwirkens von zweiter Kammer 91 und Anschlussstück 10 ohne den Griffträger. Ebenfalls in der Darstellung gemäß Figur 10 erkennbar sind die Hinterschneidungen 95 an der Innenseite der Außenschale, welche in der Einbausituation die Führungen 85 an dem Griffträger 80 hintergreifen. Am gegenüber liegenden Ende der Außenschale 90 ist ein Rasthaken 96 angeordnet, welcher hinter der Nase 86 an dem Griffträger einrastet. Hierzu kann der Rasthaken 96 reversibel aus seiner Ruheposition ausgelenkt werden und hinter der Nase 86 an dem Griffträger einhaken. Um die Montage zu erleichtern, weist der Rasthaken 96 eine Anlaufschräge auf.

Die Abdichtung der zweiten Kammer 91 erfolgt mittels des Anschlussstückes 10. Die Wandung der zweiten Kammer 91 weist eine Ausnehmung 92 auf, in der das Anschlussstück 10 mit der Nut 17 formschlüssig und kraftschlüssig einliegt. Nachdem die Außenschale 80 wie zuvor erläutert an dem Griffträger montiert wurde, liegt die Wandung der zweiten Kammer 91 in der Nut 17 des Anschlussstückes 10 formschlüssig ein. Gleichzeitig wird eine Klemmwirkung zwischen der Wandung der zweiten Kammer 91 und dem als Dichtung wirksamen Anschlussstück 10 erzeugt. Zu diesem Zweck ist das Anschlussstück 10 aus einem als Dichtung geeigneten reversibel verformbaren Kunststoff ausgebildet. Die Wannennut 17 des Anschlussstückes 10 und die Ausnehmung der Wanne 70 sind dementsprechend aufeinander abgestimmt.

Beim Verschwenken des in der Darstellung gemäß Figur 8 linken Endes der Außenschale 90 in Richtung auf den Griffträger 80 werden gleichzeitig die Ausnehmung 92 in der Wandung der zweiten Kammer 91 und die Wannennut 17 des Anschlussstückes 10 gefügt und gleiten ineinander. Die Wannennut 17 bildet damit gleichzeitig eine Positionierhilfe bei der Montage der Außenschale 90 an dem Griffträger 80. Sobald der Rasthaken 96 der Außenschale 90 hinter der Nase 86 an dem Griffträger 80 eingerastet ist, ist auch gleichzeitig der Formschluss zwischen der Ausnehmung 92 in der Wandung der zweiten Kammer 91 und der außenseitigen Wannennut 17 an dem Anschlussstück 10 hergestellt. Die zur Antennenkammernut 18 umgekehrt orientierte Wannennut 17 des Anschlussstückes kommt somit bei der Montage der Außenschale 80 automatisch in Eingriff mit der Ausnehmung 92 in der Wandung der zweiten Kammer 91, die in der Außenschale 90 ausgebildet ist.

In dem dargestellten Ausführungsbeispiel hintergreift ein an der Außenschale 90 angeordneter Rasthaken 96 eine an dem Griffträger 80 angeordnete Nase 86. Bei einer nicht dargstellten weiteren Ausführungsform erfolgt die Anordnung von Nase und Rasthaken kinematisch umgekehrt, indem an der Innenseite der Außenschale eine Nase angeordnet ist, die von einem am Griffträger angeordneten Rasthaken hintergriffen wird.

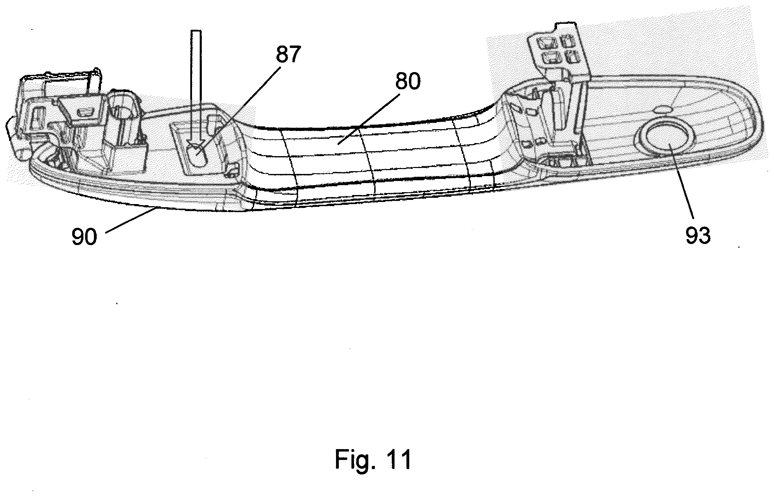

In Fig. 11 ist der Vergussprozess der als Elektronikkammer bezeichneten zweiten Kammer 91 mit der darin einliegenden Platine 40 dargestellt. In diesem Vergussprozess wird die Elektronikkammer 91 mit der darin einliegenden Platine 40 mit aushärtender Vergussmasse vergossen. Diese Vergussmasse dient dem Schutz der Elektronikkomponenten der Platine 40 in der Elektronikkammer 91 und bildet sowohl einen Schutz gegen Feuchtigkeit als auch gleichzeitig ein Dämpfungselement gegen Vibrationen. Um den zweiten Vergussprozess durchzuführen, wird die gesamte vormontierte Kraftfahrzeugtürgriffanordnung und die in der Bildebene gemäß den Figuren 8 bzw. 11 um 180° gedreht, damit die flüssige Vergussmasse von oben in die Elektronikkammer 91 einfließen kann. Um das Ausgießen der Elektronikkammer 91 mit aushärtender Vergussmasse zu ermöglichen, weist der Griffträger 80 eine Durchbrechung 87 als Befüllungsöffnung auf, durch welche die Vergussmasse in die Elektronikkammer 91 wie durch den Pfeil in Fig. 11 dargestellt eingeleitet und die Elektronikkammer 91 vollständig mit Vergussmasse verfüllt werden kann. Der Griffträger weist somit eine als Befüllungsöffnung dienende Durchbrechung 87 auf, durch die hindurch die Vergussmasse bei dem zweiten Vergussprozess in die zweite Kammer 91 eingeleitet wird.

Das Ausgießen der ersten Kammer 81, die auch als Antennenkammer bezeichnet wird, und der zweiten Kammer 91, die auch als Elektronikkammer bezeichnet wird, erfolgt somit nacheinander bei um 180° verdrehter Ausrichtung der Anordnung.

Ferner weist die äußere Schale 90 eine Durchbrechung 93 auf, durch die ein Schlüssel in ein in der Fig. 11 nicht dargestelltes Schloss eingesteckt werden kann. In der Einbausituation befindet sich das Türschloss des Kraftfahrzeuges fluchtend hinter der Durchbrechung 93 der äußeren Schale 90.

### Bezugszeichenliste

- 10: Anschlussstück
- 11, 12, 13: Kontaktstifte
- 11', 12', 13': Lötpunkte
- 17: Wannennut
- 18: Antennenkammernut
- 20: Antennenträger
- 21: Ferromagnetischer Kern
- 26: Wicklung
- 27: Sensorblech
- 30: Stecker
- 31,32: Kontaktstifte
- 31', 32': Lötpunkte
- 40: Platine
- 41: Verriegelungsblech
- 41': Lötpunkte
- 50: Antennenbaugruppe
- 60: Elektronikbaugruppe
- 80: Griffträger
- 81: Antennenkammer
- 82: Ausnehmung in der Wandung der ersten Kammer
- 83: Griffhaken
- 84: Drehachse
- 85: Führungen
- 86: Nase
- 87: Durchbrechung
- 90: Außenschale
- 91: Elektronikkammer
- 92: Ausnehmung in der Wandung der zweiten Kammer
- 93: Durchbrechung der Außenschale
- 95: Hinterschneidungen
- 96: Rasthaken

## Patentansprüche

1. Kraftfahrzeugtürgriffanordnung mit einem Griffträger (80) und einer an dem Griffträger (80) befestigten Außenschale (90), wobei zwischen dem Griffträger (80) und der Außenschale (90) zumindest eine Elektronikbaugruppe (60) mit elektronischen Bauteilen angeordnet ist, wobei der Griffträger (80) zumindest eine erste Kammer (81) zur Aufnahme elektronischer Bauteile aufweist, die nach dem Einsetzen der elektronischen Bauteile mit Vergussmasse vergossen ist, wobei eine zweite Kammer (91) zur Aufnahme elektronischer Bauteile zwischen dem Griffträger (80) und der Außenschale (90) ausgebildet ist, **dadurch gekennzeichnet, dass** der Griffträger (80) zumindest eine Durchbrechung (87) aufweist, durch welche die zweite Kammer (91) nach dem Befestigen der Außenschale (90) an dem Griffträger (80) mit Vergussmasse befüllbar ist.

2. Kraftfahrzeugtürgriffanordnung nach Anspruch 1, **dadurch gekennzeichnet, dass** die Elektronikbaugruppe (60) zumindest eine Antenne (50) mit einem ferromagnetischen Kern (21) und einer um den Kern (21) gewickelten Spule (26) und zumindest eine Platine (40) und/oder einen kapazitiven Näherungssensor aufweist, insbesondere dass die Antenne (50) in der ersten Kammer (81) einliegt und die Platine (40) und/oder der Näherungssensor in der zweiten Kammer (91) einliegt/einliegen.

3. Kraftfahrzeugtürgriffanordnung nach Anspruch 1 oder 2, **dadurch gekennzeichnet, dass** der Griffträger (80) und die Außenschale (90) formschlüssig miteinander verbunden sind.

4. Kraftfahrzeugtürgriffanordnung nach einem der vorherigen Ansprüche, **dadurch gekennzeichnet, dass** die erste Kammer (81) zumindest eine Ausnehmung (82) in einer Wandung zur Durchführung elektrisch leitender Kontaktstifte (11, 12, 13) aufweist und dass die Elektronikbaugruppe (60) ein Anschlussstück (10) aufweist, welches in der Ausnehmung (82) der Wandung der ersten Kammer (81) die erste Kammer (81) abdichtend formschlüssig und/oder kraftschlüssig einliegt.

5. Kraftfahrzeugtürgriffanordnung nach einem der vorherigen Ansprüche, **dadurch gekennzeichnet, dass** die Außenschale (90) eine Wanne aufweist, welche die zweite Kammer (91) bildet und in der ein Teil der Elektronikbaugruppe (60), insbesondere eine Platine (40) und/oder ein kapazitiver Näherungssensor, einliegt, wobei die Wanne zumindest eine Ausnehmung (92) in einer Wandung zur Durchführung elektrisch leitender Kontaktstifte (11, 12, 13) aufweist und wobei ein Anschlussstück (10) der Elektronikbaugruppe (60) in der Ausnehmung (82) der Wandung der Wanne die Wanne abdichtend formschlüssig und/oder kraftschlüssig einliegt.

6. Kraftfahrzeugtürgriffanordnung nach einem der vorherigen Ansprüche, **dadurch gekennzeichnet, dass** die Elektronikbaugruppe (60) ein Anschlussstück (10) zur Durchführung elektrischer Verbindungsleitungen (11, 12, 13) aufweist, wobei das Anschlussstück (10) außenseitig eine Antennenkammernut (18) aufweist, die mit einer Ausnehmung (82) der Wandung der ersten Kammer (81) in dem Griffträger (80) einen Formschluss bildet.

7. Kraftfahrzeugtürgriffanordnung nach einem der vorherigen Ansprüche, **dadurch gekennzeichnet, dass** die Elektronikbaugruppe (60) ein Anschlussstück (10) zur Durchführung elektrischer Verbindungsleitungen (11, 12, 13) aufweist, wobei das Anschlussstück (10) außenseitig eine Wannennut (17) aufweist, die mit einer Ausnehmung (92) der Wandung einer die zweite Kammer (92) bildenden Wanne in der Außenschale (90) einen Formschluss bildet.

8. Kraftfahrzeugtürgriffanordnung nach einem der vorherigen Ansprüche, **dadurch gekennzeichnet, dass** die Elektronikbaugruppe (60) ein Anschlussstück (10) zur Durchführung elektrischer Verbindungsleitungen (11, 12, 13) aufweist, wobei das Anschlussstück (10) außenseitig eine Antennenkammernut (18) aufweist, die mit einer Ausnehmung (82) der Wandung der ersten Kammer (81) in dem Griffträger (80) einen Formschluss bildet, und dass das Anschlussstück (10) außenseitig eine Wannennut (17) aufweist, die mit einer Ausnehmung (92) der Wandung einer Wanne in der Außenschale (90) zur Ausbildung der zweiten Kammer (91) einen Formschluss bildet, wobei die Antennenkammernut (18) und die Wannennut (17) gegenläufig angeordnet sind.

9. Verfahren zur Herstellung einer Kraftfahrzeugtürgriffanordnung nach einem der vorherigen Ansprüche, **gekennzeichnet durch** folgende Schritte:
• Einsetzen einer vorgefertigten Elektronikbaugruppe (60) in einen Griffträger (80) und Einlegen zumindest eines Teiles der Elektronikbaugruppe (60) in eine erste Kammer (81) in dem Griffträger (80);
• Ausgießen der ersten Kammer (81) mit Vergussmasse;
• Aufsetzen einer Außenschale (90) auf den Griffträger (80) und Befestigung der Außenschale (90) an dem Griffträger (80), wodurch gleichzeitig ein Teil der Elektronikbaugruppe (60) in eine zweite Kammer (91) in der Außenschale (90) eingelegt wird;
• Drehen der Kraftfahrzeugtürgriffanordnung um 180° um eine Längsachse der Kraftfahrzeugtürgriffanordnung, sodass die Außenschale (90) unten liegt;
• Ausgießen der zweiten Kammer (91) durch zumindest eine Durchtrittsöffnung (87) in dem Griffträger (80) hindurch mit Vergussmasse.

10. Verfahren nach Anspruch 9, **dadurch gekennzeichnet, dass** ein Anschlussstück (10) der Elektronikbaugruppe (60) bei dem Einsetzen der vorgefertigten Elektronikbaugruppe (60) in den Griffträger (80) und Einlegen zumindest eines Teiles der Elektronikbaugruppe (60) in eine erste Kammer (81) in dem Griffträger (80) formschlüssig und/oder kraftschlüssig insbesondere abdichtend mit einer Ausnehmung (82) in einer Wandung der ersten Kammer (81) in Eingriff gebracht wird.

11. Verfahren nach Anspruch 9 oder 10, **dadurch gekennzeichnet, dass** ein Anschlussstück (10) der Elektronikbaugruppe (60) bei dem Aufsetzen der Außenschale (90) auf den Griffträger (80) und Befestigung der Außenschale (90) an dem Griffträger (80), wodurch gleichzeitig ein Teil der Elektronikbaugruppe (60) in die zweite Kammer (91) in der Außenschale (90) eingelegt wird, formschlüssig und/oder kraftschlüssig insbesondere abdichtend mit einer Ausnehmung (92) in einer Wandung der zweiten Kammer (92) in Eingriff gebracht wird.

12. Verfahren nach einem der Ansprüche 9 bis 11, **dadurch gekennzeichnet, dass** der Griffträger (80) und die Außenschale (90) Hinterschneidungen (95) und/oder Führungen (85) aufweisen, die vom Gegenstück hintergriffen werden und wobei das Aufsetzen und Befestigen der Außenschale (90) an dem Griffträger (80) durch ein Einschieben am ersten Ende hinter die Führungen (85) am Griffträger (80) erfolgt, wobei danach ein Verschwenken des gegenüberliegenden Endes der Außenschale (90) in Richtung auf den Griffträger (80) soweit erfolgt, bis ein Einclipsen eines Rasthakens (96) an einer Nase (86) an dem Gegenstück erfolgt ist.

## Claims

1. Motor vehicle door handle assembly with a handle support (80) and an outer casing (90) attached to the handle support (80), wherein at least one electronic module (60) with electronic components is arranged between the handle support (80) and the outer casing (90), wherein the handle support (80) has at least a first chamber (81) for accommodating electronic components, into which chamber a potting compound is poured after insertion of the electronic components, wherein a second chamber (91) is formed between the handle support (80) and the outer casing (90) for accommodating electronic components, **characterized in that** the handle support (80) has at least one breakthrough (87), through which the second chamber (91) can be filled with potting compound after the outer casing (90) has been attached to the handle support (80).

2. Motor vehicle door handle assembly according to Claim 1, **characterized in that** the electronic module (60) includes at least one antenna (50) with a ferromagnetic core (21) and a coil (26) wound round the core (21) and at least one board (40) and/or a capacitive proximity sensor, in particular that the antenna (50) is embedded in the first chamber (81) and the board (40) and/or the proximity sensor is/are embedded in the second chamber (91).

3. Motor vehicle door handle assembly according to Claim 1 or 2, **characterized in that** the handle support (80) and the outer casing (90) are connected to each other in form-fitting manner.

4. Motor vehicle door handle assembly according to any one of the preceding claims, **characterized in that** the first chamber (81) has at least one cutaway (82) in a wall to allow electrically conductive contact pins (11, 12, 13) to pass through, and that the electronic module (60) has a connecting element (10) which is embedded in the cutaway (82) in the wall of the first chamber (81) in form-fitting and/or non-positive manner, sealing the first chamber (81).

5. Motor vehicle door handle assembly according to any one of the preceding claims, **characterized in that** the outer casing (90) has a trough which forms the second chamber (91) and in which a part of the electronic module (60), in particular a board (40) and/or a capacitive proximity sensor is embedded, wherein the trough has at least one cutaway (92) in a wall to allow electrically conductive contact pins (11, 12, 13) to pass through, and wherein a connecting element (10) of the electronic module (60) is embedded in the cutaway (82) in the wall of the trough in form-fitting and/or non-positive manner, sealing the trough.

6. Motor vehicle door handle assembly according to any one of the preceding claims, **characterized in that** the electronic module (60) has a connecting element (10) to allow electrically conductive connecting conductors (11, 12, 13) to pass through, wherein the connecting element (10) has an antenna chamber groove (18) on the outside, which forms a positive locking fit with a cutaway (82) in the wall of the first chamber (81) in the handle support (80).

7. Motor vehicle door handle assembly according to any one of the preceding claims, **characterized in that** the electronic module (60) has a connecting element (10) to allow electrically conductive connecting conductors (11, 12, 13) to pass through, wherein the connecting element (10) has a trough groove (17) on the outside, which forms a positive locking fit with a cutaway (92) in the wall of a trough in the outer casing (90) that forms the second chamber (92) .

8. Motor vehicle door handle assembly according to any one of the preceding claims, **characterized in that** the electronic module (60) has a connecting element (10) to allow electrically conductive connecting conductors (11, 12, 13) to pass through, wherein the connecting element (10) has an antenna chamber groove (18) on the outside which forms a positive locking fit with a cutaway (82) in the wall of the first chamber (81) in the handle support (80), and that the connecting element (10) has a trough groove (17) on the outside which forms a positive locking fit with a cutaway (92) in the wall of a trough in the outer casing (90) to create the second chamber (91), wherein the antenna chamber groove (18) and the trough groove (17) are arranged inversely to one another.

9. Method for producing a motor vehicle door handle assembly according to any one of the preceding claims, **characterized by** the following steps:
• introducing a preassembled electronic module (60) into a handle support (80) and inserting at least a part of the electronic module (60) in a first chamber (81) in the handle support (80) ;
• completely filling the first chamber (81) with potting compound;
• fitting an outer casing (90) on the handle support (80) and attaching the outer casing (90) to the handle support (80), so that at the same time a part of the electronic module (60) is inserted into a second chamber (91) in the outer casing (90);
• turning the motor vehicle door handle assembly through 180° about a longitudinal axis of the motor vehicle door handle assembly so that the outer casing (90) is at the bottom;
• completely filling the second chamber (91) with potting compound by pouring the potting compound through at least one passage opening (87) in the handle support (80).

10. Method according to Claim 9, **characterized in that** when the preassembled electronic module (60) is fitted in the handle support (80) and at least a part of the electronic module (60) is introduced into a first chamber (81) in the handle support (80) a connecting element (10) of the electronic module (60) is brought into form-fitting and/or non-positive locking, particularly sealing engagement with a cutaway (82) in a wall of the first chamber (81) .

11. Method according to Claim 9 or 10, **characterized in that** when the outer casing (90) is fitted on the handle support (80) and the outer casing (90) is attached to the handle support (80), thereby simultaneously causing a part of the electronic module (60) to be introduced into the second chamber (91) in the outer casing (90), a connecting element (10) of the electronic module (60) is brought into form-fitting and/or non-positive locking, particularly sealing engagement with a cutaway (92) in a wall of the second chamber (92).

12. Method according to any one of Claims 9 to 11, **characterized in that** the handle support (80) and the outer casing (90) have undercuts (95) and/or guides (85) which are clasped by the counterpart, and wherein the fitting and attaching of the outer casing (90) on the handle support (80) is accomplished by pushing in behind the guides (85) on the handle support (80), followed by pivoting the opposite end of the outer casing (90) towards the handle support (80) until a detent hook (96) has snapped into place on a lug (86) on the counterpart.

## Revendications

1. Système de poignée de porte de véhicule automobile avec un support de poignée (80) et une coque extérieure (90) fixée au support de poignée (80), sachant qu'au moins un module électronique (60) avec des composants électroniques est disposé entre le support de poignée (80) et la coque extérieure (90), sachant que le support de poignée (80) comporte au moins une première chambre (81) pour loger des composants électroniques, qui est coulée avec une masse de remplissage après l'insertion des composants électroniques, sachant qu'une deuxième chambre (91) est constituée pour loger des composants électroniques entre le support de poignée (80) et la coque extérieure (90), **caractérisé en ce que** le support de poignée (80) comporte au moins un passage (87) à travers lequel la deuxième chambre (91) peut être remplie avec une masse de remplissage après la fixation de la coque extérieure (90) sur le support de poignée (80).

2. Système de poignée de porte de véhicule automobile selon la revendication 1, **caractérisé en ce que** le module électronique (60) comporte au moins une antenne (50) avec un noyau ferromagnétique (21) et une bobine (26) enroulée autour du noyau (21) et au moins une carte de circuits imprimés (40) et/ou un capteur de proximité capacitif, en particulier **en ce que** l'antenne (50) vient se loger dans la première chambre (81) et la carte de circuits imprimés (40) et/ou le capteur de proximité vient/viennent se loger dans la deuxième chambre (91) .

3. Système de poignée de porte de véhicule automobile selon la revendication 1 ou 2, **caractérisé en ce que** le support de poignée (80) et la coque extérieure (90) sont reliés l'un à l'autre par conformité de forme.

4. Système de poignée de porte de véhicule automobile selon l'une quelconque des revendication précédentes, **caractérisé en ce que** la première chambre (81) comporte au moins un évidement (82) dans une paroi pour le passage de fiches de contact électro-conductrices (11, 12, 13) et **en ce que** le module électronique (60) comporte une pièce de raccord (10), laquelle loge la première chambre (81) de manière étanche par conformité de forme et/ou conformité de force dans l'évidement (82) de la paroi de la première chambre (81).

5. Système de poignée de porte de véhicule automobile selon l'une quelconque des revendications précédentes, **caractérisé en ce que** la coque extérieure (90) comporte une cuvette, laquelle forme la deuxième chambre (91) et dans laquelle est logée une partie du module électronique (60), en particulier une carte de circuits imprimés (40) et/ou un capteur de proximité capacitif, sachant que la cuvette comporte au moins un évidement (92) dans une paroi pour le passage de fiches de contact électro-conductrices (11, 12, 13) et sachant qu'une pièce de raccord (10) du module électronique (60), loge la cuvette de manière étanche par conformité de forme et/ou conformité de force dans l'évidement (82) de la paroi de cuvette.

6. Système de poignée de porte de véhicule automobile selon l'une quelconque des revendications précédente, **caractérisé en ce que** le module électronique (60) comporte une pièce de raccord (10) pour le passage de conducteurs de liaison électriques (11, 12, 13), sachant que la pièce de raccord (10) comporte extérieurement une rainure de chambre d'antenne (18), qui forme une conformité de forme avec un évidement (82) de la paroi de la première chambre (81) dans le support de poignée (80) .

7. Système de poignée de porte de véhicule automobile selon l'une quelconque des revendications précédentes, **caractérisé en ce que** le module électronique (60) comporte une pièce de raccord (10) pour le passage de conducteurs de liaison électriques (11, 12, 13), sachant que la pièce de raccord (10) comporte extérieurement une rainure de cuvette (17), qui forme une conformité de forme avec un évidement (92) de la paroi d'une cuvette formant la deuxième chambre (92) dans la coque extérieure (90) .

8. Système de poignée de porte de véhicule automobile selon l'une quelconque des revendications précédentes, **caractérisé en ce que** le module électronique (60) comporte une pièce de raccord (10) pour le passage de conducteurs de liaison électriques (11, 12, 13), sachant que la pièce de raccord (10) comporte extérieurement une rainure de chambre d'antenne (18), qui forme une conformité de forme avec un évidement (82) de la paroi de la première chambre (81) dans le support de poignée (80) et **en ce que** la pièce de raccord (10) comporte extérieurement une rainure de cuvette (17), qui forme une conformité de forme avec un évidement (92) de la paroi d'une cuvette dans la coque extérieure (90) pour la constitution de la deuxième chambre (91), sachant que la rainure de chambre d'antenne (18) et la rainure de cuvette (17) sont disposées en sens opposé.

9. Procédé de réalisation d'un système de poignée de porte de véhicule automobile selon l'une quelconque des revendications précédentes, **caractérisé par** les étapes suivantes :
• insertion d'un module électronique préfabriqué (60) dans un support de poignée (80) et introduction d'au moins une partie du module électronique (60) dans une première chambre (81) dans le support de poignée (80) ;
• coulée de remplissage de la première chambre (81) avec une masse de remplissage ;
• pose d'une coque extérieure (90) sur le support de poignée (80) et fixation de la coque extérieure (90) sur le support de poignée (80), une partie du module électronique (60) dans la deuxième chambre (91) étant de ce fait simultanément introduite dans la coque extérieure (90) ;
• rotation du système de poignée de porte de véhicule automobile de 180° autour d'un axe longitudinal du système de poignée de porte de véhicule automobile de telle manière que la coque extérieure (90) se trouve en bas ;
• coulée de remplissage de la deuxième chambre (91) à travers au moins une ouverture de passage (87) dans le support de poignée (80) avec une masse de remplissage.

10. Procédé selon la revendication 9, **caractérisé en ce qu'**une pièce de raccord (10) du module électronique (60) vient en prise, par conformité de forme et/ou par conformité de force, en particulier de manière étanche avec un évidement (82), dans une paroi de la première chambre (81) lors de l'insertion du module électronique préfabriqué (60) dans le support de poignée (80) et de l'introduction d'au moins une partie du module électronique (60) dans une première chambre (81) dans le support de poignée (80) .

11. Procédé selon la revendication 9 ou 10, **caractérisé en ce qu'**une pièce de raccord (10) du module électronique (60) vient en prise, par conformité de forme et/ou conformité de force, en particulier de manière étanche avec un évidement (92), dans une paroi de la deuxième chambre (92) lors de la pose de la coque extérieure (90) sur le support de poignée (80) et de la fixation de la coque extérieure (90) sur le support de poignée (80), une partie du module électronique (60) dans la deuxième chambre (91) étant de ce fait simultanément introduite dans la coque extérieure (90).

12. Procédé selon l'une quelconque des revendications 9 à 11, **caractérisé en ce que** le support de poignée (80) et la coque extérieure (90) comportent des dépouilles (95) et/ou des guidages (85), qui sont pris par l'arrière par la contre-pièce et sachant que la pose et la fixation de la coque extérieure (90) sur le support de poignée (80) ont lieu par une introduction par coulissement sur la première extrémité derrière les guidages (85) sur le support de poignée (80), sachant qu'ensuite un pivotement de l'extrémité opposée de la coque extérieure (90) a lieu en direction du support de poignée (80) jusqu'à ce qu'un emboîtement d'un crochet d'encliquetage (96) ait lieu sur un mentonnet (86) sur la contre-pièce.
